(19) Europäisches Patentamt
European Patent Office
Office européen des brevets

(11) Publication number: **0 315 278 B1**

(12) **EUROPEAN PATENT SPECIFICATION**

(45) Date of publication of patent specification: **09.10.91 Bulletin 91/41**

(51) Int. Cl.[5]: **C08F 218/08**, // (C08F218/08, 218:10, 220:04, 220:12)

(21) Application number: **88202447.4**

(22) Date of filing: **02.11.88**

(54) **Vinyl ester latices.**

(30) Priority: **04.11.87 GB 8725869**

(43) Date of publication of application: **10.05.89 Bulletin 89/19**

(45) Publication of the grant of the patent: **09.10.91 Bulletin 91/41**

(84) Designated Contracting States: **BE CH DE ES FR GB IT LI NL SE**

(56) References cited:
**US-A- 3 294 727**
**US-A- 3 446 767**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Scholten, Henricus Paulus Hubertus**
**Kantersteen 47**
**B-1000 Brussels (BE)**
Inventor: **Sonderman, Marc Stephen**
**Kantersteen 47**
**B-1000 Brussels (BE)**
Inventor: **Vermeulen, Jan**
**Kantersteen 47**
**B-1000 Brussels (BE)**

(74) Representative: **Tuijn, Jan Warnaar et al**
**Shell Internationale Research Maatschappij B.V., Patents, Licensing & Trade Marks Division, P.O. Box 302**
**NL-2501 CH The Hague (NL)**

**EP 0 315 278 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to latices containing interpolymers of vinyl acetate and the vinyl ester(s) of branched chain carboxylic acid(s), to the preparation of such latices, to coating compositions comprising such latices and to solid polymeric products, for example coatings and redispersible latex powders, formed by the drying of such latices.

Latices containing a interpolymer of vinyl acetate and the vinyl ester(s) of one or more tertiary carboxylic acid(s) have good properties for use in coating applications, for example as bases for matt and silk finish emulsion paints, and, as such or when dried to form latex powders, in mortar mixes. However, in the preparation of such latices a substantial amount of the monomers available is not polymerised. The presence of free monomers in the latices is considered disadvantageous. The free monomers are believed to contribute substantially to the odour of the latices and latex powders, to have a deleterious effect on latex stability and, in the context of coating applications, to have a deleterious effect on the hardness, outdoor durability and blocking resistance of films formed by drying of the latices. Further, from the point of view of toxicity it is desirable to minimize free monomers.

It is known to attempt to reduce the monomer content of a latex by mechanical methods which aid the evaporation of the monomers. For example, GB 1508813 describes a spraying method and GB 1494249 describes a method in which a gas is passed through a rotating cylinder along whose inner wall the latex flows. Chemical modification has also been used in an attempt to minimize free monomer content as described, for example, in DE 2349602 and DE 2348585, for latices based on butyl acrylate, ethyl acrylate or methyl acrylate. However, no method of reducing the free monomer content in latices of vinyl acetate and the vinyl ester(s) of one or more tertiary carboxylic acid(s) has herebefore been described.

It has now been found that the monomer conversion during emulsion polymerisation of vinyl acetate with the vinyl ester(s) of one or more tertiary carboxylic acid(s), may be increased by the presence of a small amount of an ester of acrylic or an alkylacrylic acid.

In US 3455887 there are described latices formed by emulsion polymerisation of vinyl acetate, at least one vinyl ester of a tertiary alkanoic acid, and at least one lower alkyl methacrylate, for example methyl methacrylate. The amount of vinyl acetate is said to be usually about 15 to 75% by weight, based on total weight of monomers used, preferably about 30-60%. The amount of the vinyl ester of a tertiary alkanoic acid is said to be ordinarily about 20-60% by weight, preferably about 30-50%. The amount of alkyl methacrylate is said to be generally from about 5-25% by weight, preferably 10-20%, the alkyl methacrylate being present as a substantial building block of the polymeric component of the latex.

In accordance with the present invention there is provided a process for the preparation of a latex, which comprises subjecting to emulsion polymerisation conditions an aqueous reaction mixture comprising (a) vinyl acetate, (b) the vinyl ester(s) of one or more tertiary aliphatic carboxylic acid(s), (c) one or more copolymerisable, monomeric stabilizer(s) and (d) 0.1 to 3% by weight, based on total weight of components (a) and (b), of one or more ester(s) of acrylic and/or an alkylacrylic acid, in which the ester group(s) is/are saturated.

The presence of one or more such ester(s) of acrylic and/or an alkylacrylic acid in the process described above makes possible a reduction in the free monomer content of the latices produced. This effect may be achieved across the entire range of relative proportions of components (a) and (b) by effecting redox initiation of the reaction mixture. Thus components (a) and (b) may be present, for example, in relative proportions in the range 100 parts by weight (a) : 10-900 parts (b), preferably 25-500 parts (b). When in a process in accordance with the invention thermal initiation of the reaction mixture is effected and the proportion by weight of component (a) exceeds that of component (b), emulsion polymerisation takes place but no monomer-reducing effect has been observed, but the monomer-reducing effect of component (d) as defined above has been found when the thermally initiated reaction mixture has a substantial proportion of component (b), the relative proportions by weight of components (a) and (b) suitably being in the range 100 parts (a) : 100-900 parts (b), preferably 100-500 parts (b), for achievement of this effect.

Since high monomer content of latices is most pronounced, and is most likely to generate adverse consumer reaction, in high quality latices, that is, in latices in which there is a high proportion of component (b) present, it may be stated that the weight of component (b) is preferably equal to or greater than that of component (a), for example, the weight of component (b) being in the range 1-9 times that of component (a). A preferred weight range is 100 parts (a) : 100-500 parts, especially 100-400 parts, and most preferably 150-300 parts (b).

Esters of acrylic and/or an alkylacrylic acid are suitably optionally substituted C1-10 alkyl, preferably C1-4 alkyl, esters of acrylic and/or a C1-10 alkyl acrylic acid, preferably of C1-4 alkyl acrylic acid, especially of methacrylic acid. Preferred substituent(s) include hydroxy group(s), and, across adjacent carbon atoms, epoxide linkage(s). Specific examples of ester groups include methyl, ethyl, propyl, butyl, hydroxyethyl, hydroxypropyl and glycidyl groups. Particularly preferred is methyl methacrylate.

The proportion of such ester(s) present is preferably in the range 0.15-1.5 parts by weight, based on the total weight of components (a) and (b). Although a combination of such esters may be employed any one ester alone will have the monomer-reducing effect and preferably only one will be employed.

The component(s) (b) may be represented by the general formula

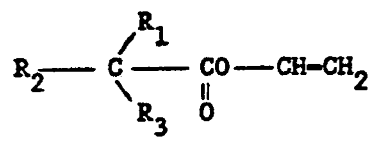

where each group R is an alkyl group. Preferably, the groups R of such ester(s) contain 3-13 carbon atoms in total, most preferably 7-8.

The component (b) may be a single chemical compound but more commonly, as a consequence of the preparation of such products, will be a mixture of isomers which vary in the branching in the aliphatic moiety.

Particularly preferred components (b) are sold under the trade marks "VeoVa 9" and "VeoVa 10", and comprise a number of isomers in which the acid moiety contains 9 and 10 carbon atoms respectively and a small amount of close homologues.

The constituents (a) and (b) are the major constituents of the interpolymer contained in a latex produced in accordance with the present invention but similar products may be prepared which contain small amounts, preferably no more than 20% by weight based on the total weight of components (a) and (b), of further copolymerised constituent(s), in addition to the co-polymerisable, monomeric stabilizer(s), and ester(s) of acrylic or an alkylacrylic acid previously described. Such products fall within the scope of this invention. Preferably, however, such interpolymers are composed substantially entirely of the components previously described.

Emulsion polymerisation conditions are familiar to persons skilled in the art and generally involve a temperature of 40-100°C, (typically 40-70°C when redox initiation is employed and 60-100°C when thermal initiation is employed), the presence of stabilizers additional to the copolymerised, monomeric stabilizers previously described and one or more polymerisation initiators and buffering agents. Stabilisers suitably constitute about 1-4% by weight of the latex in total. It is preferred that the stabilizers used in the latex comprise at least one anionic surface active agent, which is believed to have a beneficial effect on the stability of the latex and in particular on the reaction mixture during the polymerisation process, facilitating the formation of micelles in which the interpolymer is formed, and at least one non-ionic surface active agent, which is believed to contribute to latex stability ; or at least one surface active agent of the mixed anionic/non-ionic type ; as well as the previously-described stabilizer of the copolymerised type, for example acrylic acid.

Suitable anionic surface active agents include alkylaryl sulphonates, for example alkylbenzene sulphonates ; salts of sulphosuccinic esters ; alkyl sulphates, alkyl sulphonates, sulphates of hydroxyethyl esters of monocarboxylic acids, sulphates of alkylphenoxypolyethoxyethanols, sulphates and sulphonates of hydroxypropyl esters of monocarboxylic acids and sulphates of monglycerides of monocarboxylic acids, such compounds having 12-24 carbon atoms ; and salts of $C_{9-19}$ monocarboxylic acids. Suitably 0.05-1% by weight of the latex may be consituted by anionic surface active agents, preferably 0.1-0.5%.

Suitable non-ionic surface active agents include reaction products of hydroxy compounds with alkylene oxides, such as ethylene oxide or propylene oxide, for example a compound of the general formula $R\text{-}C_6H_4\text{-}O\text{-}(CH_2\text{-}CH_2\text{-}O)_n\text{-}H$ where R represents a $C_{6-16}$, especially $C_{8-9}$, alkyl group and n represents a number from 3 to 40 ; reaction products of ethylene oxide with propylene glycol ethers, or with monocarboxylic acids, suitably of 6-20 carbon atoms, for example lauric acid, palmitic acid or stearic acid, or with alcohols, suitably of 6-20 carbon atoms, for example octyl, lauryl or cetyl alcohol. Suitably 0.5-2% of the weight of the latex may be constituted by non-ionic surface active agents.

Suitable surface active agents of the mixed anionic/non- ionic type include sulphonates based on alkylaryl polyglycol ethers.

Preferably both an anionic and an non-ionic surface active agent are used. Especially preferred is the use of an alkykaryl sulphonate together with a compound $R\text{-}C_6H_4\text{-}O\text{-}(CH_2\text{-}CH_2\text{-}O)_n\text{-}H$, for example nonyl phenol ethoxylate.

Colloidal stabilizers may also be included. Such compounds include cellulose compounds, for example methylcellulose, carboxymethylcellulose and, especially, hydroxyethyl cellulose ; natural products such as starches, gelatine, casein, gum arabic and alginates ; polyvinyl alcohol of both fully and partially hydrolized grades, and polyvinyl pyrrolidone. Suitably 0.02-1% of the weight of the latex may be constituted by colloidal stabilisers.

However, there is no advantage from the point of view of improved monomer conversion in using colloidal stabilizers, and preferably they are not used.

Preferred stabilizers of the monomeric copolymerised type are of the so-called acid functional type, for example acrylic acid. Low quantities of copolymerised, monomeric stabilizers may be used, suitably 0.1-1.5% based on weight of the latex. Since these compounds are copolymerised the eventual interpolymer may comprise about 0.2-3% by weight, based on the total weight of components (a) and (b). Acrylic acid is preferably used in an amount of 0.1-1.5% by weighs based on the total weighs of components (a) and (b).

Suitable as initiators are compounds which form free radicals under the reaction conditions for the emulsion polymerisation, whether by thermal breakdown, redox reaction or photo initiation. Initiators include peroxides, hydroperoxides, persulphates, peroxydiphosphates or diazo compounds. Examples are benzoyl peroxide, ditertiary butyl peroxide, hydrogen peroxide, alpha, alpha'-azo-isobutyric nitrile and sodium, ammonium or, especially, potassium persulphate. 0.1-1%, preferably 0.2-0.5% of initiator, based on weight of the reaction mixture, is suitably employed. Compound which cause redox decomposition of above-named 'per' initiators include salts of reducing acids of sulphur, suitably alkali metal sulphites, (for example $Na_2SO_3$), alkali metal bisulphites, (for example $NaHSO_3$), alkali metal metabisulphites, (for example $Na_2S_2O_5$), alkali metal thiosulphates, (for example $Na_2S_2O_3$) alkali metal formaldehyde sulphoxylates, (for example $Na[HSO_2 \cdot CH_2O]$) and, the preferred class, alkali metal dithionites (for example $Na_2S_2O_4$). Such compounds, when used, may constitute 0.1-0.5% of the weight of the reaction mixture.

The polymerisation is suitably effected at 60-100°C when thermal initiation is used ; and at 40-70°C when redox initiation is used. When redox initiation is used the reaction is carried out in an inert atmosphere, nitrogen suitably being used to flush out the reaction vessel prior to commencement of the reaction and air being excluded from the vessel during the reaction.

Buffering agents suitable for use in the polymerisation process are water-soluble compounds which can prevent the pH of the mixture falling below about 4. Preferred buffering agents include borax and an organic acid, suitable acetic acid or acrylic acid, or an alkali metal carbonate or bicarbonate, or acetate. If acrylic acid is employed in the buffer it will be copolymerised, conferring stability on the latex, and the pH may need to be increased once polymerisation is complete.

A further aspect of the present invention relates to a latex produced by the process described above, and the interpolymer which forms on drying of such a latex, for example to form a coating on a substrate or a powder intended for reconstitution as a latex or use in a mortar. Suitably, the interpolymer comprises 25-65% of the weight of the latex, preferably 40-60%.

Latices in accordance with the invention may find application in various fields, for example in paper and textile coatings, adhesives, polishes, mortars, sealants, putties, lacquers and paints. They are of particular interest as lacquers and paints due their good film forming properties, their water resistance, their high pigment binding power, the lack of tackiness of the films, their alkali resistance and resistance to ultra violet light. Paints containing the latices of the invention contain pigments, and will commonly contain further constituents, examples being fillers, co-solvents, thickeners, dispersants, preservatives, corrosion inhibitors, and anti foaming agents.

The invention will now be further described with reference to the following examples.

A) <u>Examples of latex preparation - thermal initiation</u>

Examples 1:

| Ingredients | parts wt | |
|---|---|---|
| Initial reactor charge: | 25.0 | Water, demineralised |
| | 0.5 | "Humifen SF 90"+ (10% aq. sol.) |
| | 2.0 | "Arkopal N 230"+ (25% aq. sol.) |
| | 0.1 | Potassium persulphate |
| Aqueous pre-emulsion phase: | 60.0 | Water |
| | 9.4 | "Humifen SF 90"+ (10%) aq. sol.) |
| | 6.0 | "Arkopal N 230"+ (25% aq. sol.) |
| | 0.4 | Potassium persulphate |
| | 0.4 | Potassium carbonate |
| Monomer mixture: | 40.0 | "VeoVa 10"+ |
| | 30.0 | "VeoVa 9"+ |
| | 29.0 | Vinyl acetate |
| | 1.0 | Acrylic acid |
| | X | Acrylic acid ester - see Table 1 |

\+ "Humifen SF 90" is a trade mark for an alkylaryl sulphonate anionic surfactant.
"Arkopal N 230" is a trade mark for a non-ionic surfactant.
"VeoVa 9" and "VeoVa 10" are trade marks of SHELL for vinyl esters of tertiary carboxylic acids.

<u>Experimental procedure</u>

A monomer pre-emulsion was prepared by adding the monomer mixture to the agitated aqueous phase. The initial reactor charge was heated. As soon as the temperature of the reactor charge reached 80°C, the addition of monomer pre-emulsion was started. The addition of the pre-emulsion was started at low rate. The total addition time was about 3 hours. At the end of the addition period the temperature of the reaction mixture was maintained at 80°C for a further two hours. The latex was cooled and filtered.

Example 2 :

The above procedure was repeated except that the acrylate ester was incorporated after the addition of the pre-emulsion.

Example 3 :

For control purposes the procedure of Examples 1 was repeated without an acrylic acid ester present.

B) Examples of latex preparation - redox initiation

Examples 4:

| Ingredients | parts wt | |
|---|---|---|
| Initial reactor charge: | 25.0 | Water, demineralised |
| | 0.6 | "Humifen SF 90" |
| | 0.06 | Sodium dithionite ($Na_2S_2O_4$) |
| | 0.09 | Potassium persulphate |
| | 0.05 | Sodium bicarbonate |
| Initiator solution: | 60.0 | Water, demineralised |
| | 0.4 | "Humifen SF 90" |
| | 10.0 | "Arkopal N-230" (25% aq.sol.) |
| | 0.29 | Sodium dithionite ($Na_2S_2O_4$) |
| | 0.43 | Potassium persulphate |
| | 0.25 | Sodium bicarbonate |
| Monomer mixture: | 29.5 | Vinyl acetate |
| | 40.0 | "VeoVa 10" |
| | 30.0 | "VeoVa 9" |
| | 0.5 | Acrylic acid, low inhibitor grade (pure) |
| | X | Acrylic acid ester - see Table 1 |

Experimental procedure

The reactor was flushed carefully with nitrogen and a small stream of nitrogen was maintained during the polymerisation.

The initial reactor charge and the initiator solution were prepared as follows :

The anionic surfactant and sodium dithionite were dissolved in the amount of water required. When these were completely dissolved the potassium persulphate and sodium bicarbonate were added. Finally the "Arkopal N230" solution was added to the initiator solution.

The initial reactor charge was introduced into the reactor and heated to a temperature of 55°C. Separate additions of the monomer mixture and the initiator solution were started immediately at such a rate that the additions took 2 and 2.5 hours respectively. After the initiator addition was completed the temperature was held at 55°C for another 1.5 hours. The latex was cooled and filtered.

Example 5 :

For control purposes the procedure of Example 4 was repeated without an acrylic acid ester present.

Example 6 :

The procedure of Example 4 was repeated except that the parts by weight of VeoVa 9, VeoVa 10 and vinyl acetate used were 11, 14 and 74.5 respectively.

Example 7 :

The procedure of Example 6 was repeated without an acrylic acid ester present, as a control.

Example 8 :

The procedure of Example 4 was repeated except that no VeoVa 9 was present and the parts by weight of VeoVa 10 and vinyl acetate were 30 and 69.5 respectively.

Example 9 :

The procedure of Example 8 was repeated without an acrylic acid ester present, as a control.

C) Analysis and results

The latices prepared as described above were analysed for the content of free vinyl esters, as follows :

A sample of latex was reacted at 0-5°C with an excess of a solution of bromine in acetic acid. The excess bromine was then determined iodometrically with sodium thiosulphate solution.

A suitable weight of the sample, or a known quantity of the diluted sample, was introduced into a 250 ml conical flask and dissolved in 50 ml glacial acetic acid. The flask was stoppered and immersed in ice for ten minutes. 10 ml of a bromine solution (prepared by dissolving 0.26 ml bromine in 1 litre of acetic acid) was then added via an automatic pipette. The flask was closed and the contents swirled gently and replaced in the icebath for another three minutes. 10 ml potassium iodide solution and 100 ml distilled water, both precooled in ice, were then added and homogenised. The liberated iodine was titrated immediately against a 0.01 M sodium thiosulphate solution using starch solution to detect the end point. A blank determination was carried out in the same manner, omitting the sample.

The weight percentages of free monomers in the latex samples were then readily calculable.

In the Table below the weight percentages given are based on the interpolymer of the latex.

Results

| EXAMPLE | ACRYLATE ESTER | AMOUNT (wt %) | CONVERSION (wt %) |
|---|---|---|---|
| 1 | Glycidyl methacrylate | 1.00 | 99.4 |
| 1 | Hydroxyethyl methacrylate | 0.93 | 99.6 |
| 1 | Hydroxypropyl methacrylate | 1.00 | 99.5 |
| 1 | Butyl acrylate | 0.91 | 99.5 |
| 1 | Methyl methacrylate | 1.44 | 99.5 |
| 1 | Methyl methacrylate | 0.72 | 99.6 |
| 1 | Methyl methacrylate | 0.36 | 99.5 |
| 1 | Methyl methacrylate | 0.18 | 99.4 |
| 2 | Methyl methacrylate | 0.72 | 99.3 |
| 3 | Control for 1 and 2 | 0.00 | 99.1 |
| 4 | Methyl methacrylate | 0.72 | 98.2 |
| 4 | Methyl methacrylate | 0.36 | 98.3 |
| 5 | Control for 4 | 0.00 | 96.7 |
| 6 | Methyl methacrylate | 0.72 | 99.3 |
| 7 | Control for 6 | 0.00 | 98.8 |
| 8 | Methyl methacrylate | 0.72 | 99.4 |
| 9 | Control for 8 | 0.00 | 98.7 |

Coatings formed by the drying of films of the latex had a minimum film-forming temperature (MFT) of 16-17°C.

## Claims

### Claims for the following Contracting States : BE, CH, DE, FR, GB, IT, LI, NL, SE

1. A process for the preparation of a latex, which comprises subjecting to emulsion polymerisation conditions an aqueous mixture comprising (a) vinyl acetate, (b) the vinyl ester(s) of one or more tertiary aliphatic carboxylic acid(s), (c) one or more copolymerisable, monomeric stabilizer(s) and (d) about 0.1 to about 3% by weight, based on total weight of components (a) and (b), of one or more ester(s) of acrylic and/or an alkylacrylic acid, in which the ester group(s) is/are saturated.

2. A process according to claim 1, wherein the relative proportions by weight of components (a) and (b) in the aqueous mixture are in the range 100 parts (a) : 10-900 parts (b).

3. A process according to claim 2 wherein said proportions are in the range 100 parts (a) : 100-500 parts (b).

4. A process according to claim 1, 2 or 3 wherein component (d) comprises optionally substituted C1-10 alkyl ester(s) of acrylic and/or of a C1-10 alkylacrylic acid.

5. A process according to claim 4, wherein the ester(s) is/are selected from methyl, ethyl, propyl, butyl, hydroxyethyl, hydroxypropyl and glycidyl esters of acrylic or methacrylic acid.

6. A process according to claim 5, wherein component (d) is methyl methacrylate.

7. A process according to any preceding claim wherein the proportion of the said ester(s) is in the range 0.15-1.5 parts by weight based on the total weight of components (a) and (b).

8. A process according to any preceding claim, wherein 0.1-1.5% of acrylic acid is present, by weight based on the total weight of components (a) and (b).

9. A latex containing as polymeric constituent 25-65% by weight of an interpolymer of (a) vinyl acetate, (b)

the vinyl ester(s) of one or more tertiary aliphatic carboxylic acid(s), (c) one or more copolymerisable, monomeric stabilizer(s), and (d) one or more esters, as defined in any of claims 1, 4, 5 or 6, the proportion of said ester(s) being in the range about 0.1-3% by weight, based on total weight of components (a) and (b).

10. A solid interpolymeric product formed by the drying of a latex as claimed in claim 9.

**Claims for the following Contracting State : ES**

1. A process for the preparation of a latex, which comprises subjecting to emulsion polymerisation conditions an aqueous mixture comprising (a) vinyl acetate, (b) the vinyl ester(s) of one or more tertiary aliphatic carboxylic acid(s), (c) one or more copolymerisable, monomeric stabilizer(s) and (d) about 0.1 to about 3% by weight, based on total weight of components (a) and (b), of one or more ester(s) of acrylic and/or an alkylacrylic acid, in which the ester group(s) is/are saturated.

2. A process according to claim 1, wherein the relative proportions by weight of components (a) and (b) in the aqueous mixture are in the range 100 parts (a) : 10-900 parts (b).

3. A process according to claim 2 wherein said proportions are in the range 100 parts (a) : 100-500 parts (b).

4. A process according to claim 1, 2 or 3 wherein component (d) comprises optionally substituted C1-10 alkyl ester(s) of acrylic and/or of a C1-10 alkylacrylic acid.

5. A process according to claim 4, wherein the ester(s) is/are selected from methyl, ethyl, propyl, butyl, hydroxyethyl, hydroxypropyl and glycidyl esters of acrylic or methacrylic acid.

6. A process according to claim 5, wherein component (d) is methyl methacrylate.

7. A process according to any preceding claim wherein the proportion of the said ester(s) is in the range 0.15-1.5 parts by weight based on the total weight of components (a) and (b).

8. A process according to any preceding claim, wherein 0.1-1.5% of acrylic acid is present, by weight based on the total weight of components (a) and (b).

**Patentansprüche**

**Patentansprüche für folgende Verstragsstaaten : BE, CH, DE, FR, GB, IT, LI, NL, SE**

1. Verfahren zur Herstellung eines Latex, in dem man ein wäßriges Gemisch aus (a) Vinylacetat, (b) Vinylester(n) von einer oder mehreren tertiären aliphatischen Carbonsäuren, (c) einem oder mehreren copolymerisierbaren monomeren Stabilisator(en) und (d) etwa 0,1 bis etwa 3 Gew.% — bezogen auf das Gesamtgewicht der Komponenten (a) und (b) von einem oder mehreren Ester(n) von Acryl oder Alkylacrylsäure mit gesättigten Estergruppen einer Emulsionspolymerisation unterzieht.

2. Verfahren nach Anspruch 1, wobei die relativen Gew.– Anteile der Komponenten (a) und (b) in der wäßrigen Mischung auf 100 Teile (a) 10-900 Teile (b) beträgt.

3. Verfahren nach Anspruch 2, wobei diese verhältnisse bei 100 bis 500 Teile (b) auf 100 Teile (a) liegen.

4. Verfahren nach Anspruch 1, 2 oder 3, wobei die Komponente (d) gegebenenfalls substituierte(n) $C_1$-$C_{10}$ Alkylester von Acrylsäure und/oder $C_1$-$C_{10}$ Alkylacrylsäure enthält.

5. Verfahren nach Anspruch 4, wobei der/die Ester ausgewählt ist/sind von Methyl-, Ethyl-, Propyl-, Butyl-, Hydroxyethyl-, Hydroxypropyl- und Glycidylester von Acryl- oder Methacrylsäure.

6. Verfahren nach Anspruch 5, wobei die Komponente (d) Methylmethacrylat ist.

7. Verfahren nach einem der vorhergehenden Ansprüche, wobei der/die Ester in einer Menge von 0,15-1,5 Gew.-Teile, bezogen auf das Gesamtgewicht der Komponenten (a) und (b), vorliegen.

8. Verfahren nach einem der vorhergehenden Ansprüche, wobei 0,1%-1,5% Acrylsäure, bezogen auf das Gesamtgewicht der Komponenten (a) und (b), vorliegt.

9. Latex, enthaltend als Polymerbestandteil 25-65 Gew.% eines Interpolymeren von (a) Vinylacetat, (b) Vinylester einer oder mehrerer tertiärer aliphatischer Carbonsäuren, (c) einer oder mehreren copolymerisierbaren monomeren Stabilisatoren und (e) einem oder mehreren Estern entsprechend der Ansprüche 1, 4, 5 oder 6, mit der Maßgabe, daß die Ester in einer Menge von etwa 0,1-3 Gew.%, bezogen auf das Gesamtgewicht der Komponenten (a) und (b), vorliegen.

10. Feste Interpolymer-Produkte, hergestellt durch Trocknen eines Latex entsprechend Anspruch 9.

**Patentansprüche für folgenden Vertragsstaat : ES**

1. Verfahren zur Herstellung eines Latex, in dem man ein wäßriges Gemisch aus (a) Vinylacetat, (b) Vinylester(n) von einer oder mehreren tertiären aliphatischen Carbonsäuren, (c) einem oder mehreren copolymerisierbaren monomeren Stabilisator(en) und (d) etwa 0,1 bis etwa 3 Gew.% — bezogen auf das Gesamtgewicht der Komponenten (a) und (b) — von einem oder mehreren Ester(n) von Acryl oder Alkylacrylsäure mit gesättigten Estergruppen einer Emulsionspolymerisation unterzieht.

2. Verfahren nach Anspruch 1, wobei die relativen Gew.– Anteile der Komponenten (a) und (b) in der wäßrigen Mischung auf 100 Teile (a) 10-900 Teile (b) beträgt.

3. Verfahren nach Anspruch 2, wobei diese verhältnisse bei 100 bis 500 Teile (b) auf 100 Teile (a) liegen.

4. Verfahren nach Anspruch 1, 2 oder 3, wobei die Komponente (d) gegebenenfalls substituierte(n) $C_1$-$C_{10}$ Alkylester von Acrylsäure und/oder $C_1$-$C_{10}$ Alkylacrylsäure enthält.

5. Verfahren nach Anspruch 4, wobei der/die Ester ausgewählt ist/sind von Methyl-, Ethyl-, Propyl-, Butyl-, Hydroxyethyl-, Hydroxypropyl- und Glycidylester von Acryl- oder Methacrylsäure.

6. Verfahren nach Anspruch 5, wobei die Komponente (d) Methylmethacrylat ist.

7. Verfahren nach einem der vorhergehenden Ansprüche, wobei der/die Ester in einer Menge von 0,15-1,5 Gew.-Teile, bezogen auf das Gesamtgewicht der Komponenten (a) und (b), vorliegen.

8. Verfahren nach einem der vorhergehenden Ansprüche, wobei 0,1%-1,5% Acrylsäure, bezogen auf das Gesamtgewicht der Komponenten (a) und (b), vorliegt.

## Revendications

### Revendications pour les Etats contractants suivants : BE, CH, DE, FR, GB, IT, LI, NL, SE

1. Un procédé pour la préparation d'un latex, qui consiste à soumettre à des conditions de polymérisation par émulsion un mélange réactionnel aqueux comportant : (a) de l'acétate de vinyle, (b) l'(les) ester(s) vinylique(s) d'un ou de plus d'un acide carboxylique aliphatique tertiaire, (c) un ou plus d'un agent stabilisant monomère, copolymérisable, et (d) de 0,1 à 3% en poids, en se basant sur le poids total des composants (a) et (b), d'un ou de plus d'un ester d'acide acrylique et/ou alkylacrylique, dans lequel le(les) groupe(s) ester est (sont) saturé(s).

2. Un procédé selon la revendication 1, dans lequel les proportions relatives en poids des composants (a) et (b) dans le mélange aqueux sont dans la gamme de 100 parties de (a) pour 10 à 900 parties de (b).

3. Un procédé selon la revendication 2, dans lequel lesdites proportions sont dans la gamme de 100 parties de (a) pour 100 à 500 parties de (b).

4. Un procédé selon la revendication 1, 2 ou 3, dans lequel le composant (d) comprend un (des) ester(s) facultativement substitué(s) par un (des) alkyle(s) en $C_1$ à $C_{10}$ et d'acide acrylique et/ou d'un acide alkyl (en $C_1$ à $C_{10}$) acrylique.

5. Un procédé selon la revendication 4, dans lequel l'(les) ester(s) est (sont) choisi(s) parmi les esters méthyliques, éthyliques, propyliques, butyliques, hydroxyéthyliques, hydroxypropyliques et glycidyliques de l'acide acrylique ou méthacrylique.

6. Un procédé selon la revendication 5, dans lequel le composant (d) est le méthacrylate de méthyle.

7. Un procédé selon l'une des revendications précédentes, dans lequel la proportion dudit (desdits) ester(s) est dans la gamme de 0,15 à 1,5 parties en poids en se basant sur le poids total des composants (a) et (b).

8. Un procédé selon l'une quelconque des revendications précédentes, dans lequel de 0,1 à 1,5% d'acide acrylique est présent, en poids, en se basant sur le poids total des composants (a) et (b).

9. Un latex renfermant, comme constituant polymère, de 25 à 65% en poids d'un interpolymère de (a) l'acétate de vinyle, (b) l'(les) ester(s) vinylique(s) d'un ou de plus d'un acide aliphatique carboxylique tertiaire, (c) un ou plus d'un agents stabilisants monomères, copolymérisables, et (d) un ou plus d'un ester, tel que défini dans l'une quelconque des revendications 1, 4, 5 ou 6, la proportion dudit (desdits) ester(s) étant dans la gamme d'environ 0,1 à 3% en poids, en se basant sur le poids total des composants (a) et (b).

10. Un produit interpolymère solide, formé par le séchage d'un latex tel que revendiqué dans la revendication 9.

### Revendications pour l'Etat contractant suivant : ES

1. Un procédé pour la préparation d'un latex, qui consiste à soumettre à des conditions de polymérisation par émulsion un mélange réactionnel aqueux comportant : (a) de l'acétate de vinyle, (b) l'(les) ester(s) vinylique(s) d'un ou de plus d'un acide carboxylique aliphatique tertiaire, (c) un ou plus d'un agent stabilisant monomère, copolymérisable, et (d) de 0,1 à 3% en poids, en se basant sur le poids total des composants (a) et (b), d'un ou de plus d'un ester d'acide acrylique et/ou alkylacrylique, dans lequel le(les) groupe(s) ester est (sont)

saturé(s).

2. Un procédé selon la revendication 1, dans lequel les proportions relatives en poids des composants (a) et (b) dans le mélange aqueux sont dans la gamme de 100 parties de (a) pour 10 à 900 parties de (b).

3. Un procédé selon la revendication 2, dans lequel lesdites proportions sont dans la gamme de 100 parties de (a) pour 100 à 500 parties de (b).

4. Un procédé selon la revendication 1, 2 ou 3, dans lequel le composant (d) comprend un (des) ester(s) facultativement substitué(s) par un (des) alkyle(s) en $C_1$ à $C_{10}$ et d'acide acrylique et/ou d'un acide alkyl (en $C_1$ à $C_{10}$) acrylique.

5. Un procédé selon la revendication 4, dans lequel l'(les) ester(s) est (sont) choisi(s) parmi les esters méthyliques, éthyliques, propyliques, butyliques, hydroxyéthyliques, hydroxypropyliques et glycidyliques de l'acide acrylique ou méthacrylique.

6. Un procédé selon la revendication 5, dans lequel le composant (d) est le méthacrylate de méthyle.

7. Un procédé selon l'une des revendications précédentes, dans lequel la proportion dudit (desdits) ester(s) est dans la gamme de 0,15 à 1,5 parties en poids en se basant sur le poids total des composants (a) et (b).

8. Un procédé selon l'une quelconque des revendications précédentes, dans lequel de 0,1 à 1,5% d'acide acrylique est présent, en poids, en se basant sur le poids total des composants (a) et (b).